# FASCICULE DE BREVET EUROPEEN

(11) **EP 3 745 224 B1**
(45) Date de publication et mention de la délivrance du brevet: **15.10.2025**
(21) Numéro de dépôt: 20176600.3
(22) Date de dépôt: 26.05.2020
(51) Int. Cl.: G05B 19/4061, B25J 9/16

(54) **COLLABORATION D'UN ROBOT ET D'UN OPÉRATEUR EN VUE DE MODIFIER UNE PIÈCE**
ZUSAMMENARBEIT ZWISCHEN EINEM ROBOTER UND EINEM BEDIENER ZUR VERÄNDERUNG EINES WERKSTÜCKS
COLLABORATION OF A ROBOT AND AN OPERATOR IN ORDER TO MODIFY A PART

(30) Priorité: 27.05.2019 FR 1905571
(43) Date de publication de la demande: 02.12.2020
(73) Titulaire: Safran Nacelles, 76700 Gonfreville-l'Orcher (FR)
(72) Inventeur: RITT, Martin, 77550 Moissy-Cramayel (FR); LEPAPE, Nicolas, 77550 Moissy-Cramayel (FR); NICOLAS, Wilfried, 77550 Moissy-Cramayel (FR)
(74) Mandataire: Regimbeau

(56) Documents cités:
- EP-A1- 3 479 971
- EP-A2- 2 380 709

## Description

### DOMAINE TECHNIQUE GENERAL

L'invention concerne la collaboration d'un opérateur avec un robot en vue de la fabrication ou la modification d'une pièce notamment d'une pièce aéronautique, par exemple d'une turbomachine.

### ETAT DE LA TECHNIQUE

La fabrication de pièces aéronautique, par exemple de turbomachine, nécessite l'intervention d'un opérateur. Cet opérateur peut être assistée par un robot pour effectuer des opérations spécifiques.

Par exemple, un opérateur procède à des trous dans un pièce et le robot intervient sur chaque trou afin de réaliser une opération spécifique sur chaque trou. Une telle opération est par exemple un épinglage, la pose d'une fixation, un ébavurage, etc.

Pour obtenir cette collaboration, le robot est manipulé selon des actions programmées et l'opérateur doit effectuer toutes ses propres actions selon la même séquence que le robot sans oubli ni interversion au risque que le robot ne puisse plus suivre l'opérateur.

Dans l'exemple d'un travail collaboratif où l'opérateur perce des trous et le robot pose des épingles dans les trous, l'opérateur doit percer ces trous selon le schéma d'épinglage programmé dans le robot. En cas de non-respect de ce schéma par l'opérateur, le robot va attendre en face de la position du trou attendu jusqu'à ce qu'il soit percé. Ceci résulte en des pertes de temps pour la fabrication et peut conduire à des erreurs de fabrication.

### PRESENTATION DE L'INVENTION

L'invention propose de pallier au moins un de ces inconvénients en s'adaptant aux différentes actions de l'opérateur.

A cet effet, l'invention propose un procédé selon la revendication 1.

L'invention est avantageusement complétée par les caractéristiques suivantes :
- L'exécution de l'opération comprend un déplacement du robot selon au moins une trajectoire prédéterminé dépendant de l'environnement du robot
- le procédé comprend une étape de surveillance des mouvements du robot afin d'éviter une collision avec l'opérateur, ledit procédé comprenant une étape de commande du robot afin qu'il s'arrête, qu'il ralentisse son mouvement ou qu'il détermine une trajectoire d'évitement de la collision.
- le procédé comprend une étape de génération d'un signal auditif ou visuel en cas de risque de collision avec l'opérateur.
- la surveillance est mise en oeuvre au moyen de capteur(s) de proximité (13) disposé sur le robot.
- l'opération effectuée par l'opérateur est un perçage d'un trou, l'opération effectuée par le robot dans un trou est choisie parmi le groupe suivant : ébavurage, pose d'épingle, pose de rivets, boulonnage.
- l'opération effectuée par l'opérateur est la mise en position d'une nouvelle pièce, l'opération effectuée par le robot étant choisie parmi le groupe suivant : inspection de la pièce, pose de mastic.

L'invention concerne également un système selon la revendication 8.

### PRESENTATION DES FIGURES

D'autres caractéristiques, buts et avantages de l'invention ressortiront de la description qui suit, qui doit être lue en regard des dessins annexés sur lesquels :
- la figure 1 illustre un environnement de mise en œuvre de l'invention ;
- les figures 2 et 3 illustrent schématiquement des étapes d'un procédé selon l'invention.

Sur l'ensemble des figures les éléments similaires portent des références identiques.

### DESCRIPTION DETAILLEE

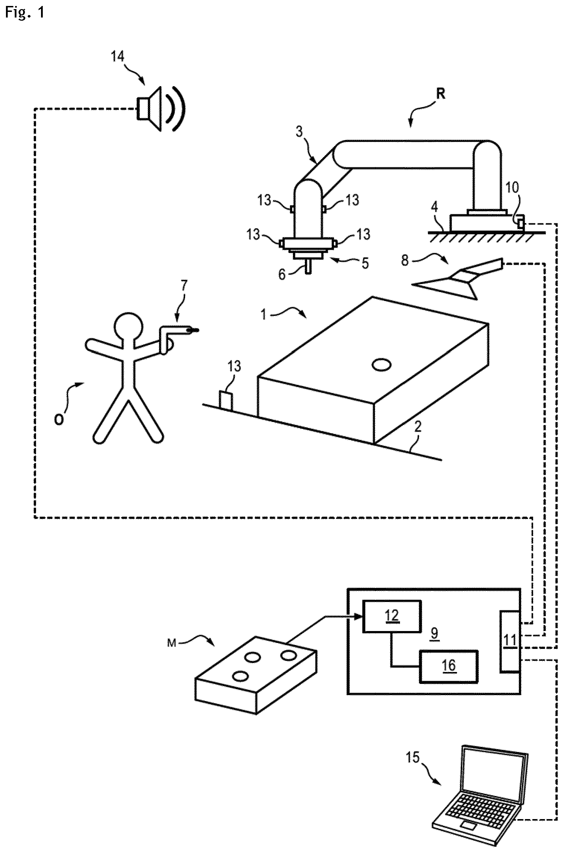

La **figure 1** illustre environnement dans lequel un opérateur O et un robot R collaborent à la modification d'une pièce 1. Une pièce est typiquement une pièce aéronautique, par exemple d'une turbomachine d'un aéronef par exemple :
La pièce 1 est par exemple positionnée sur un banc de travail 2 de manière à être accessible par le robot R afin que ce dernier effectue une opération sur la pièce. Le sert donc de support à la pièce.

Le robot R est par exemple un robot 5/6/7 axes de type connu et ne sera pas décrit plus en détail car connu de l'homme du métier. Le robot R comporte un bras 3 articulé depuis son support 4 et comprend à son extrémité libre 5 un effecteur 6 ou porte outil. L'effecteur et le porte outil sont choisis en fonction de l'opération à effectuer sur la pièce.

L'opérateur O est équipé d'un outil 7 également choisi en fonction de l'opération à effectuer : une perceuse pour un trou par exemple.

Dans le cas d'un trou, le robot R peut effectuer l'une des opérations suivantes : ébavurage, pose d'épingle, pose de rivets, boulonnage. Ces opérations peuvent être combinées pour une même pièce à savoir, par exemple, qu'un trou d'une pièce nécessite une pose de rivet tandis qu'un autre trou nécessite la pose d'épingle.

Un système de prise de vue 8 est disposé à proximité de la pièce 1, au-dessus ou à côte afin de permettre l'acquisition d'une image de la pièce en cours de modification à des fins de comparaison avec un modèle d'une pièce. Alternativement, le système de prise de vue peut être positionné sur le robot R. Le système de prise de vue 8 est une caméra avec un champ de vue suffisamment large pour observer la zone de travail choisie. Les spécifications de cette caméra sont suffisantes à la détection des éléments ciblés. Elle fonctionne par une prise d'image à intervalle régulier et permet donc la détection. La caméra est par exemple basée sur la technologie CCD.

Une unité de traitement 9 est connectée au robot R, l'unité de traitement 9 et le robot R comportant à ce titre chacun une interface de communication 10, 11. La communication entre le robot peut être filaire ou sans fil.

De même le système de prise de vue 8 est connectée à l'unité de traitement 9.

L'unité de traitement 9 comprend une mémoire 12 permettant le stockage de un ou plusieurs modèle(s) de pièce en fonction des modifications souhaitées. Par exemple, lorsqu'il s'agit de procéder à des opérations dans des trous effectués par un opérateur, le modèle est une pièce sur laquelle sont localisés les trous dans lesquels une opération doit être effectuée. En outre, en fonction des différents modèles, des trajectoires à suivre par le robot sont également stockées. Ces trajectoires permettent au robot de se positionner correctement par rapport à la pièce afin qu'il puisse effectuer l'opération correctement.

Afin d'assurer la sécurité de l'opérateur dans l'environnement de travail vis-à-vis du robot R notamment, un ou plusieurs capteur(s) 13 de proximité, d'effort ou de collision sont disposés sur le robot R ou bien dans l'environnement d'intervention de ce dernier.

De tels capteurs 13 permettent le cas échéant de commander le robot R afin qu'il ralentisse voire qu'il s'arrête en fonction de la proximité du robot R avec l'opérateur. En outre, des dispositifs de type alarme visuelle ou sonore 14 peuvent aussi être présents pour alerter par exemple l'opérateur d'un danger.

Une interface utilisateur 15 est connectée à l'unité de traitement 9 et permet à un opérateur O de paramétrer le robot R, charger de nouveaux modèles M de pièce. L'interface utilisateur comprend un écran et un clavier par exemple mais peut être constituée d'une tablette tactile ou équivalente.

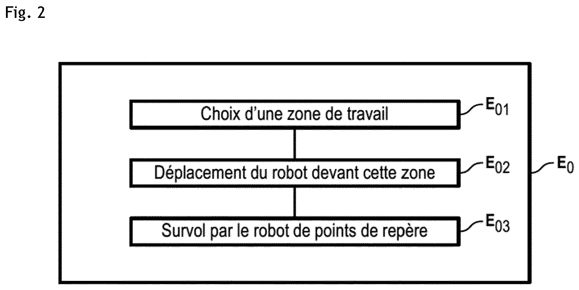

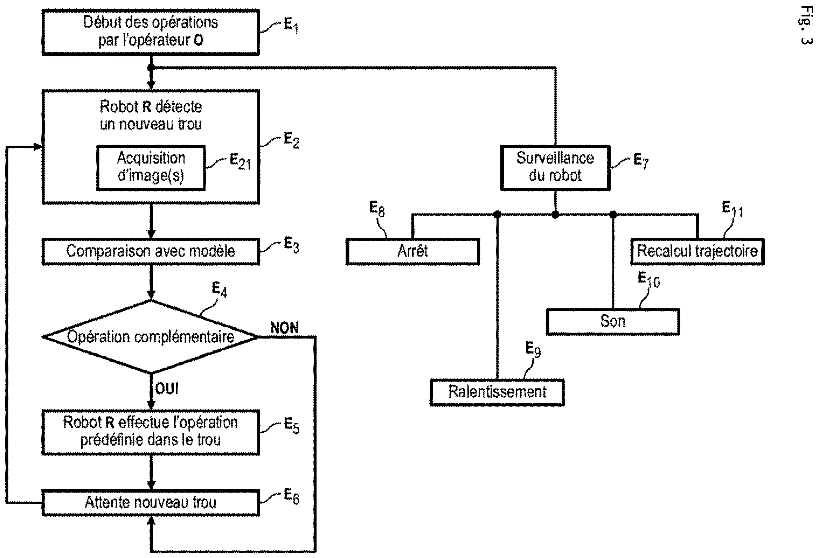

L'unité de traitement comprend également un processeur 16 configuré pour mettre en oeuvre un procédé de modification de l'état d'une pièce qui va être décrit ci-après et en relation avec les **figures 2** et **3****.**

Avant de débuter les opérations de modifications de la pièce, il est procédé à un positionnement du robot dans l'environnement de travail (étape E0).

Ce positionnement consiste d'abord à ce que l'opérateur choisisse une zone de travail (étape E01). Il s'agit ici de définir via l'interface utilisateur 15 la zone sur laquelle le robot R va intervenir. En particulier, l'opérateur, via l'interface utilisateur 15 peut indiquer au robot sa future zone de travail (en bas de la pièce, à gauche, à droite, au centre, etc.). De ce fait, le robot se positionne à distance devant cette zone lui permettant ainsi de la visualiser correctement pour effectuer la détection des éléments ciblés.

Une fois la zone choisie, le robot R est déplacé ou se déplace lui-même devant cette zone ou bien à un endroit depuis lequel il peut accéder à la zone de travail (étape E02). Ce déplacement est commandé à distance via l'interface utilisateur.

Lorsque le robot R est positionné au niveau de la zone de travail ce dernier effectue un survol (étape E03) complet de la pièce en se repérant au moyen de repères disposés sur la pièce. Ce survol permet au robot d'avoir une délimitation exacte de sa zone de travail. Ces repères peuvent prendre plusieurs formes et peuvent être positionnés à plusieurs endroits stratégiques de la pièce. Pour une pièce carrée par exemple on peut considérer que des repères disposés au quatre coins de la pièce sont suffisants.

A l'issue du positionnent du robot dans sa zone de travail, les opérations de modifications peuvent débuter.

On se place dans ce qui suit dans le cas où un opérateur O doit percer plusieurs trous dans une pièce au moyen d'une perceuse par exemple et que le robot doit effectuer une opération complémentaire dans chaque trou effectué par l'opérateur O. Le robot R collabore donc avec l'opérateur O pour modifier l'état de la pièce. Comme mentionné ci-avant les opérations de l'opérateur et du robot R peuvent être variées et le procédé peut s'appliquer à toutes collaborations nécessitant à la fois des opérations effectuées par l'opérateur O et par le robot R aux mêmes endroits de la pièce ou non.

Un opérateur commence par percer un ou plusieurs trous dans la pièce (étape E1) et une détection du perçage d'un trou est effectuée (étape E2). Cette détection consiste à acquérir (étape E21) des images de la pièce afin d'évaluer si son état est modifié. L'acquisition peut être continue ou mise en œuvre à une fréquence bien choisie. Avantageusement, l'acquisition est mise en œuvre au moyen du système de prise de vue 8.

Ensuite, il est évalué si dans le trou qui vient d'être effectué le robot R doit effectuer une opération complémentaire à celle de l'opérateur O (étapes E3 et E4) et si c'est le cas, le robot R est commandé (étape E5) pour qu'il effectue l'opération complémentaire prédéfinie dans le trou qui a été détecté sinon le robot R attend (étape E6) qu'un trou soit de nouveau percé.

Pour évaluer si le robot R doit effectuer une opération complémentaire, la ou les image(s) acquise(s) sont comparées à un modèle de pièce comprenant la pièce telle qu'elle doit être modifiée. Par exemple, l'unité de traitement compare l'image acquise par le système de prise de vue 8 et la compare à un modèle 3D théorique de la pièce. Les écarts sont mis en évidence et l'information d'un écart entre l'image et le modèle est obtenue.

La modification que doit effectuer le robot là où l'opérateur O a modifié la pièce est préprogrammée à l'avance et ne sera pas plus détaillée ici. Également, pour rejoindre la position idéale pour effectuer l'opération le robot R suit une trajectoire prédéterminée à l'avance. Les opérations à effectuer ainsi que les trajectoires sont stockées dans la mémoire 12 de l'unité de traitement 9. La trajectoire prédéterminée dépend de l'environnement pour que le robot R rejoigne la position et est déterminée en tenant compte des informations des capteurs 13 afin d'éviter toutes collisions. Le robot R a donc besoin de la coordonnée de la position ainsi que le type d'opération à effectuer sur cette position.

Après avoir effectuée l'opération, le robot se met dans une position d'attente qu'un nouveau trou soit percé. Cette position d'attente est également atteinte si après que le trou a été détecté il n'est pas nécessaire qu'une opération complémentaire soit effectuée.

De manière complémentaire et en parallèle des différentes étapes visant à modifier la pièce, il est procédé à une surveillance des mouvements du robot R (étape E7) afin d'éviter une collision entre l'opérateur et le robot R. Dans le cas où un risque de collision est identifié, le robot R peut soit s'arrêter (étape E8) soit ralentir son mouvement (étape E9). En complément ou en alternative un signal sonore ou visuel peut être émis (étape E10) pour alerter l'opérateur qu'il y a un danger. De manière complémentaire, le robot peut adapter son déplacement afin d'éviter la collision (étape E11).

## Revendications

1. Procédé de modification de l'état d'une pièce, typiquement une pièce aéronautique et notamment d'une turbomachine, au moyen d'un robot (R) commandé par une unité (9) de traitement, une pièce (1) étant disposée dans un environnement de travail auquel un opérateur (O) a accès pour effectuer des opérations sur la pièce, ledit procédé comprenant :
- effectuer une ou plusieurs opérations sur la pièce par l'opérateur ;
et les étapes suivantes, mises en œuvre par l'unité (9) de traitement :
- détection (E2) d'une opération effectuée sur la pièce par l'opérateur comprenant acquisition (E21) d'au moins une image de la pièce ; et
comparaison (E3) de l'image de la pièce à un modèle de pièce,
**caractérisé en ce que**
ledit modèle comprend des positions sur lesquelles des opérations sont à effectuer par le robot consécutivement à une opération de l'opérateur ;
et si à l'endroit de la pièce où l'opération a été effectuée le robot doit réaliser une opération ;
- exécution (E5) par le robot (R) d'une opération complémentaire à celle de l'opérateur et prédéfinie sur ladite pièce à l'endroit de la pièce où l'opérateur a effectué l'opération ;
après avoir effectuée l'opération complémentaire ou si après que l'opération a été détectée il n'est pas nécessaire qu'une opération complémentaire soit effectuée :
mettre le robot dans un position d'attente qu'une nouvelle opération sur la pièce soit effectuée par l'opérateur.

2. Procédé selon la revendication 1, dans lequel l'exécution de l'opération comprend un déplacement du robot selon au moins une trajectoire prédéterminé dépendant de l'environnement du robot

3. Procédé selon l'une des revendications précédentes, comprenant une étape de surveillance (E7) des mouvements du robot afin d'éviter une collision avec l'opérateur, ledit procédé comprenant une étape de commande du robot afin qu'il s'arrête, qu'il ralentisse son mouvement ou qu'il détermine une trajectoire d'évitement de la collision.

4. Procédé selon la revendication précédente, comprenant une étape de génération (E10) d'un signal auditif ou visuel en cas de risque de collision avec l'opérateur.

5. Procédé selon la revendication 3, dans lequel la surveillance est mise en oeuvre au moyen de capteur(s) de proximité (13) disposé sur le robot.

6. Procédé selon l'une des revendications précédentes, dans lequel l'opération effectuée par l'opérateur est un perçage d'un trou, l'opération effectuée par le robot dans un trou est choisie parmi le groupe suivant : ébavurage, pose d'épingle, pose de rivets, boulonnage.

7. Procédé selon l'une des revendications 1 à 5, dans lequel l'opération effectuée par l'opérateur est la mise en position d'une nouvelle pièce, l'opération effectuée par le robot étant choisie parmi le groupe suivant : inspection de la pièce, pose de mastic.

8. Système comprenant un robot (R) et une unité (9) de traitement configurée pour commander le robot selon les étapes effectuées par l'unité de traitement telles que définies par les revendications précédentes.

## Patentansprüche

1. Verfahren zur Änderung des Zustands eines Werkstücks, typischerweise eines aeronautischen Werkstücks und insbesondere eines Turbotriebwerks, mittels eines Roboters (R), der von einer Verarbeitungseinheit (9) gesteuert wird, wobei ein Werkstück (1) in einer Arbeitsumgebung angeordnet ist, zu der ein Bediener (O) Zugang hat, um Arbeitsgänge an dem Werkstück durchzuführen, wobei das Verfahren umfasst:
- Durchführen eines oder mehrerer Arbeitsgänge an dem Werkstück durch den Bediener;
und die folgenden Schritte, die von der Verarbeitungseinheit (9) durchgeführt werden:
- Erkennen (E2) eines von dem Bediener an dem Werkstück durchgeführten Arbeitsgangs, umfassend das Erfassen (E21) von mindestens einem Bild des Werkstücks; und Vergleichen (E3) des Bildes des Werkstücks mit einem Werkstückmodell,
**dadurch gekennzeichnet, dass** das Modell Positionen umfasst, an denen nach einem Arbeitsgang des Bedieners Arbeitsgänge von dem Roboter durchzuführen sind;
und wenn an der Stelle des Werkstücks, an der der Arbeitsgang durchgeführt wurde, der Roboter einen Arbeitsgang ausführen muss;
- Ausführen (E5) eines Arbeitsgangs, der zu dem des Bedieners komplementär und an dem Werkstück an der Stelle des Werkstücks, an der der Bediener den Arbeitsgang durchgeführt hat, vordefiniert ist, durch den Roboter (R);
nachdem der komplementäre Arbeitsgang durchgeführt wurde oder wenn es nach der Erkennung des Arbeitsgangs nicht notwendig ist, dass ein komplementärer Arbeitsgang durchgeführt wird:
Versetzen des Roboters in eine Position der Erwartung der Durchführung eines neuen Arbeitsgangs durch den Bediener.

2. Verfahren nach Anspruch 1, wobei die Ausführung des Arbeitsgangs eine Verlagerung des Roboters gemäß mindestens einer vorbestimmten Bahn in Abhängigkeit von der Umgebung des Roboters umfasst.

3. Verfahren nach einem der vorstehenden Ansprüche, umfassend einen Schritt des Überwachens (E7) der Bewegungen des Roboters, um eine Kollision mit dem Bediener zu vermeiden, wobei das Verfahren einen Schritt des Steuerns des Roboters umfasst, damit er anhält, seine Bewegung verlangsamt oder eine Kollisionsvermeidungsbahn bestimmt.

4. Verfahren nach vorstehendem Anspruch, umfassend einen Schritt des Erzeugens (E10) eines akustischen oder visuellen Signals bei Gefahr einer Kollision mit dem Bediener.

5. Verfahren nach Anspruch 3, wobei die Überwachung mittels eines oder mehrerer Näherungssensoren (13) durchgeführt wird, die am Roboter angeordnet sind.

6. Verfahren nach einem der vorstehenden Ansprüche, wobei der vom Bediener ausgeführte Arbeitsgang das Bohren eines Lochs ist und der vom Roboter in einem Loch ausgeführte Arbeitsgang aus der folgenden Gruppe ausgewählt ist: Entgraten, Stecken von Stiften, Setzen von Nieten, Verschrauben.

7. Verfahren nach einem der Ansprüche 1 bis 5, wobei der vom Bediener ausgeführte Arbeitsgang das Positionieren eines neuen Werkstücks ist und der vom Roboter ausgeführte Arbeitsgang aus der folgenden Gruppe ausgewählt ist: Prüfen des Werkstücks, Auftragen von Dichtmasse.

8. System, umfassend einen Roboter (R) und eine Verarbeitungseinheit (9), die zum Steuern des Roboters gemäß den Schritten, die von der Verarbeitungseinheit wie in den vorstehenden Ansprüchen definiert durchgeführt werden, ausgelegt ist.

## Claims

1. Method for modifying the condition of a component, typically an aeronautical component and in particular a turbomachine component, by means of a robot (R) controlled by a processing unit (9), a component (1) being placed in a working environment to which an operator (O) has access in order to perform operations on the component, said method comprising:
- performing one or more operations on the component by the operator;
and the following steps, implemented by the processing unit (9):
- detecting (E2) an operation performed on the component by the operator, comprising acquisition (E21) of at least one image of the workpiece; and
comparing (E3) the image of the workpiece with a workpiece model, **characterised in that** said model comprises positions at which operations are to be performed by the robot following an operation by the operator;
and if, at the location on the component where the operation was performed, the robot must perform an operation;
- execution (E5) by the robot (R) of an operation complementary to that of the operator and predefined on said component at the location on the component where the operator performed the operation;
after performing the complementary operation or if, after the operation has been detected, it is not necessary for a complementary operation to be performed: placing the robot in a waiting position until a new operation on the component is performed by the operator.

2. Method according to claim 1, wherein the execution of the operation includes moving the robot along at least one predetermined trajectory depending on the robot's environment.

3. Method according to one of the preceding claims, comprising a step of monitoring (E7) the movements of the robot in order to avoid a collision with the operator, said method comprising a step of controlling the robot so that it stops, slows down its movement or determines a collision avoidance trajectory.

4. Method according to the preceding claim, comprising a step of generating (E10) an audible or visual signal in the event of a risk of collision with the operator.

5. Method according to claim 3, in which monitoring is implemented by means of proximity sensor(s) (13) located on the robot.

6. Method according to one of the preceding claims, wherein the operation performed by the operator is drilling a hole, and the operation performed by the robot in a hole is selected from the following group: deburring, pinning, riveting, bolting.

7. Method according to one of claims 1 to 5, wherein the operation performed by the operator is the positioning of a new component, the operation performed by the robot being selected from the following group: inspection of the component, application of sealant.

8. System comprising a robot (R) and a processing unit (9) configured to control the robot according to the steps performed by the processing unit as defined by the preceding claims.
